# EUROPÄISCHE PATENTSCHRIFT

(11) **EP 0 581 242 B1**
(45) Veröffentlichungstag und Bekanntmachung des Hinweises auf die Patenterteilung: **27.09.1995**
(21) Anmeldenummer: 93111982.0
(22) Anmeldetag: 27.07.1993
(51) Int. Cl.: B60R 22/46, B60R 22/28

(54) **Sicherheitsgurt-Rückhaltesystem mit Gurtstraffer**
Seat belt restraint system with belt tensioner
Système de retenue pour ceinture de sécurité à tendeur de sangle

(30) Priorität: 28.07.1992 DE 4224924
(43) Veröffentlichungstag der Anmeldung: 02.02.1994
(73) Patentinhaber: TRW Occupant Restraint Systems GmbH, 73553 Alfdorf (DE)
(72) Erfinder: Föhl, Artur, D-73614 Schorndorf (DE)
(74) Vertreter: Degwert, Hartmut, Dipl.-Phys.

(56) Entgegenhaltungen:
- EP-A- 0 540 921
- DE-A- 2 411 702
- DE-A- 3 307 093
- DE-A- 4 020 600
- DE-A- 4 106 480
- FR-A- 2 353 312
- US-A- 4 258 934
- US-A- 5 076 608

## Beschreibung

Die Erfindung betrifft ein Sicherheitsgurt-Rückhaltesystem für Fahrzeuge, mit einem Gurtstraffer, der mittels eines Angriffsteils am Gurtband zur Verkürzung von dessen wirksamer Länge angreift und dessen Antrieb von der aufprallbedingten Verlagerung eines Fahrzeugteils relativ zum Fahrzeugaufbau abgeleitet ist.

Ein Sicherheitsgurt-Rückhaltesystem dieser Art ist beispielsweise aus der DE 31 31 637 A1 bekannt. Bei einem harten Fahrzeugaufprall treten eine Verformung des Fahrzeugaufbaus im vorderen Bereich und eine Verlagerung des Motor/Getriebe-Blocks relativ zum Fahrzeugaufbau auf. Von dieser Relativverschiebung kann mittels eines Zugseils der benötigte Linearantrieb für die Gurtstraffung abgeleitet werden.

Es sind verschiedene Ausführungen von Gurtstraffern bekannt, die mittels eines Angriffsteils am Gurtband angreifen, um unter Bildung einer Schlaufe die Gurtlose aus dem Gurtsystem herauszuziehen. Ein Beispiel ist der in der DE 30 44 951 A1 beschriebene Gurtstraffer, bei dem der Antrieb durch eine pyrotechnische Kolben/Zylinder-Einheit erfolgt.

Wenn der Antrieb für den Gurtstraffer von einem Fahrzeugteil abgeleitet werden soll, das bei einem Fahrzeugaufprall eine Relativverschiebung zum Fahrzeugaufbau erfährt, muß dafür gesorgt werden, daß keine zu hohen Kräfte am Gurtband angreifen. Eine Kraftbegrenzung kann beispielsweise durch eine Sollbruchstelle in dem Zugseil erreicht werden, durch welches die Bewegung des Fahrzeugteils auf das Angriffsteil übertragen wird, welches seinerseits am Gurtband angreift. Die Dimensionierung einer solchen Sollbruchstelle ist aber kritisch.

In leistungsfähigen Sicherheitsgurt-Rückhaltesystemen für Fahrzeuge wird angestrebt, die im Gurtband auftretenden Lastspitzen durch Energiewandlung abzubauen. Eine solche Energiewandlung kann mittels eines Kraftbegrenzers erfolgen, der im Kraftfluß des Gurtbandes liegt und relativ zueinander verschiebbare Teile aufweist, bei deren Relativverschiebung unter Last eine plastische Materialverformung auftritt. Ein für diesen Zweck geeigneter Kraftbegrenzer ist beispielsweise in der DE 39 33 721 A1 beschrieben. Er eignet sich zur Einfügung zwischen das Gurtschloß und einen Beschlag zur Verankerung am Fahrzeugaufbau.

Bei Verwendung eines Gurtstraffers der eingangs angegebenen Art kommt die Einfügung eines solchen Kraftbegrenzers in den Kraftfluß zwischen dem Fahrzeugteil und dem Angriffsteil nicht in Betracht, da die Vorverlagerung des Fahrzeuginsassen und die hierbei erwünschte Energiewandlung erst auftreten, nachdem die Relativverschiebung des Fahrzeugteils zum Fahrzeugaufbau bereits ein solches Maß erreicht haben kann, daß schon zuvor eine Abkopplung des Zugseils von dem Angriffsteil erfolgt sein muß.

Durch die Erfindung wird nun ein Sicherheitsgurt-Rückhaltesystem für Fahrzeuge geschaffen, durch welches auch ohne kritische Dimensionierung von Sollbruchstellen in einem Zugmittel eine sichere Abkopplung des Angriffsteils von dem Fahrzeugteil nach erfolgter Gurtstraffung über eine genau festgelegte Strecke gewährleistet ist, so daß auch die Möglichkeit eröffnet wird, einen Kraftwandler zum Abbau von Belastungsspitzen im Gurtbandsystem auf dem Weg des Zugmittels anzuordnen.

Dies wird bei einem Sicherheitsgurt-Rückhaltesystem der eingangs angegebenen Art erfindungsgemäß dadurch erreicht, daß in den Kraftfluß zwischen dem Fahrzeugteil und dem Angriffsteil eine Entkopplungseinrichtung eingefügt ist, die aus zwei kraftschlüssig gekoppelten, unter Last relativ zueinander im Sinne einer Entfernung voneinander verschiebbaren Kopplungselementen besteht, von denen das erste, gurtbandseitige über einen ersten Zugmittelabschnitt an das Angriffsteil und das zweite, antriebsseitige über einen zweiten Zugmittelabschnitt an das Fahrzeugteil angeschlossen ist, daß dem zweiten Kopplungselement eine Führungseinrichtung zugeordnet ist, die am Fahrzeugaufbau abgestützt und mit einem Anschlag zur Begrenzung der Verlagerung des zweiten Kopplungselements bei einer Gurtstraffung versehen ist, und daß zwischen der Führungseinrichtung und dem zweiten Kopplungselement eine Rücklaufsperre angeordnet ist, die einer Rückbewegung des zweiten Kopplungselements vom Anschlag fort entgegenwirkt. Wenn bei einem Fahrzeugaufprall beispielsweise der Motor/Zylinder-Block relativ zum Fahrzeugaufbau verschoben wird, so wird diese Relativbewegung über ein Zugmittel, insbesondere ein Zugseil, auf das zweite Kopplungselement übertragen, welches sich daraufhin auf den Anschlag an der Führungseinrichtung zu bewegt. Bei einem stärkeren Fahrzeugaufprall wird dieser Anschlag erreicht. Eine weitere Verlagerung des zweiten Kopplungselements wird durch den am Fahrzeugaufbau abgestützen Anschlag verhindert. Tritt eine Überlastung auf, so reißt das Zugseil am zweiten Kopplungselement ab. Das Kopplungselement bleibt dann aber in seiner verlagerten Stellung in der Nähe des Anschlags, da nunmehr die Rücklaufsperre wirksam wird. Das Gurtbandsystem ist folglich nach einer genau bestimmten Wegstrecke der Verlagerung des zweiten Kopplungselements von dem Fahrzeugteil entkoppelt.

Gemäß einer vorteilhaften Weiterbildung der Erfindung wird diese Eigenschaft ausgenutzt, um zwischen dem zweiten Kopplungselement und dem am ersten Kopplungselement befestigten Zugmittelabschnitt einen Kraftbegrenzer anzuordnen, in dem eine Energiewandlung durch plastische Materialverformung erfolgt. Zu diesem Zweck ist das erste Kopplungselement als im Inneren des zweiten, rohrförmigen Kopplungselements verschiebbar aufgenommener Kolben ausgebildet, und der Kraftschluß zwischen dem ersten und dem zweiten Kopplungselement ist durch Wälzkörper hergestellt, die radial innen an dem Kolben abgestützt sind und an der Innenseite der Wandung des zweiten, rohrförmigen Kopplungselements angreifen sowie unter Last in diese bei plastischer Materialverformung eindringen. Die Entkopplungseinrichtung bildet so mit dem Kraftbegrenzer eine kompakte, schlanke Baugruppe, deren Unterbringung im Fahrzeug keine besonderen Schwierigkeiten bereitet. Alle Teile dieser Baugruppe sind kostengünstig in Serienfertigung herstellbar, da weder an die Werkstoffe, noch an die Herstellungstoleranzen besonders hohe Ansprüche gestellt werden müssen.

Gemäß einer vorteilhaften Weiterbildung der Erfindung weist der Gurtstraffer ein auf einer Seite des freiverlaufenden Gurtbandes in geringem Abstand von diesem angeordnetes Stützteil auf, und auf der anderen Seite des Gurtbandes ist in geringem Abstand von diesem das Angriffsteil angeordnet. Bei Aktivierung des Gurtstraffers wird das Angriffsteil gegen das Gurtband, dieses gegen das Stützteil und schließlich das Angriffsteil unter Bildung einer zum Gurtbandverlauf parallelen Gurtbandschlaufe an dem Stützteil vorbeibewegt. Das Angriffsteil ist zwischen den ersten Enden zweier paralleler Schenkel einer Schwinge gehalten, die im Ruhezustand des Gurtstraffers mit quer zum Gurtband gehaltenen Schenkeln an deren Kanten auf dem Stützteil abgestützt ist. Der erste Zugmittelabschnitt ist an den zweiten Enden der Schenkel der Schwinge angeschlossen. Ein solcher Gurtstraffer erfordert wenig Bauraum für seine Unterbringung im Fahrzeug und greift schonend am Gurtband an, um dieses nicht zu beschädigen.

Weitere Merkmale und Vorteile der Erfindung ergeben sich aus der folgenden Beschreibung und aus der Zeichnung, auf die Bezug genommen wird. In der Zeichnung zeigen:
- Fig. 1: eine teilweise geschnittene, schematische Seitenansicht eines in ein bestehendes Sicherheitsgurtsystem integrierten Gurtstraffers;
- Fig. 2: eine Perspektivansicht der in Fig. 1 gezeigten Anordnung;
- Fig. 3: eine Schnittansicht des eigentlichen Gurtstraffers im Ruhezustand;
- Fig. 4: eine der Fig. 3 entsprechende Schnittansicht, die den Zustand kurz nach Aktivierung des Gurtstraffers zeigt;
- Fig. 5: eine den Figuren 1 und 2 entsprechende Ansicht, die den Gurtstraffer im Verlauf der Bildung einer Gurtbandschlaufe zeigt; und
- Fig. 6, 7 und 8: Längsschnitte einer bei diesem System vorgesehenen Entkopplungs/Kraftbegrenzer-Baugruppe im Ruhezustand, nach erfolgter Gurtstraffung und im Verlaufe der bei der Kraftbegrenzung auftretenden Energiewandlung.

Bei einem herkömmlichen Sicherheitsgurtsystem ist am B-Pfosten eines Fahrzeugs in der Nähe des Fahrzeugbodens ein Gurtaufroller 10 befestigt. Über dem Gurtaufroller ist etwa in Kopfhöhe des Fahrzeuginsassen ein Umlenkbeschlag 12 am B-Pfosten des Fahrzeugs befestigt. Zwischen Gurtaufroller 10 und Umlenkbeschlag 12 erstreckt sich geradlinig ein Gurtbandabschnitt 14. An diesem Gurtbandabschnitt 14 ist ein allgemein mit 16 bezeichneter Gurtstraffer angeordnet.

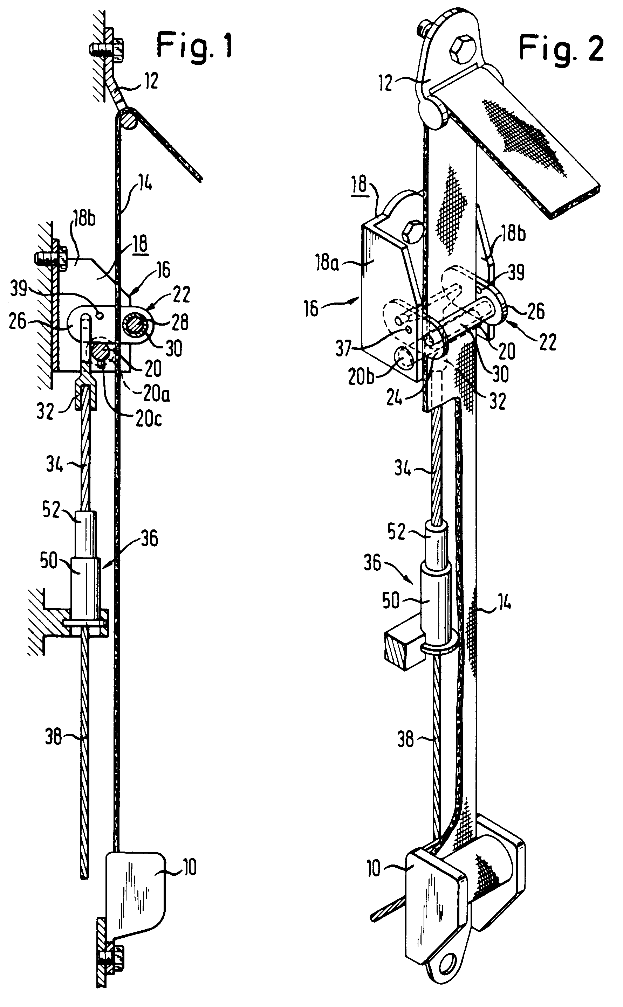

Der Gurtstraffer 16 umfaßt ein U-förmiges Beschlagteil 18, das gleichfalls am B-Pfosten des Fahrzeugs befestigt ist. Die beiden Seitenwände 18a, 18b des Beschlagteils 18 sind durch ein Stützteil 20 miteinander verbunden. Dieses Stützteil 20 ist, wie aus Fig. 1 ersichtlich, aus einem starren Zapfen gebildet, der an seinem einen Ende einen Flansch 20a zur Anlage an der Außenseite der Seitenwand 18b des Beschlagteils 18 aufweist und an seinem gegenüberliegenden, mit 20b bezeichneten Ende an der Seitenwand 18a festgenietet ist. Das Stützteil 20 ist mittels einer Nase 20c, die in eine entsprechende Ausnehmung der Seitenwand 18b des Beschlagteils 18 eingreift, drehfest an diesem gehalten.

An dem Beschlagteil 18 ist eine Schwinge 22 in einer in den Figuren 1, 2 und 3 gezeigten Ruhestellung gehalten. Diese Schwinge 22 besteht aus zwei parallelen, im Abstand voneinander gehaltenen Schenkeln 24, 26, die an ihren ersten Enden durch eine starre Welle 28 miteinander verbunden sind, auf der eine Rolle 30 leichtgängig drehbar gelagert ist. Diese Rolle 30 bildet das Angriffsteil, mit dem der Gurtstraffer am Gurtband angreift. Zwischen den anderen Enden der Schenkel 24, 26 ist ein T-förmiger Zuganker 32 verschwenkbar gelagert. An diesem Zuganker 32 ist ein erster Zugseilabschnitt 34 befestigt. Die Schwinge 22 wird in der in den Figuren 1 bis 3 gezeigten Ruhestellung durch Scherstifte 37, 39 gehalten, die durch miteinander fluchtende Bohrungen in den Seitenwandungen 18a, 18b des Beschlagteils 18 einerseits und den Schenkeln 24, 26 der Schwinge 22 andererseits eingesetzt sind. In dieser Ruhestellung sind die Schenkel 24, 26 der Schwinge 22 quer zur Verlaufsrichtung des Gurtbandabschnitts 14 angeordnet. Die Schwinge 22 stützt sich an den Kanten der Schenkel 24, 26 auf dem Stützteil 20 ab. Dieses Stützteil befindet sich auf der einen Seite des Gurtbandabschnitts 14 in geringem Abstand von diesem, und die Rolle 30 befindet sich in einem Abstand auf der gegenüberliegenden Seite des Gurtbandabschnitts 14. Das Gurtband ist somit unbehindert zwischen Stützteil 20 und Rolle 30 sowie zwischen den Schenkeln 24, 26 der Schwinge 22 durchgeführt.

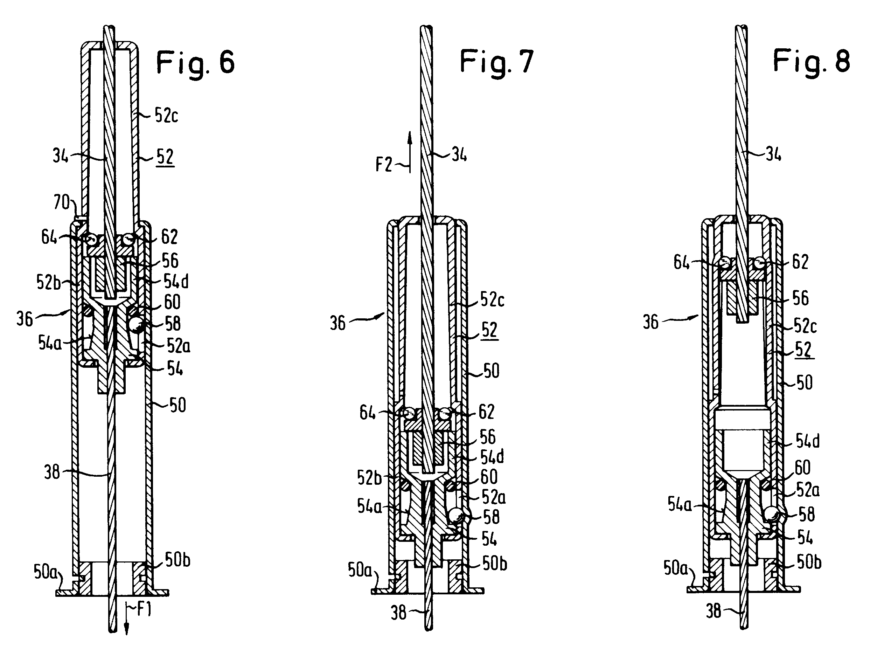

Der Zugseilabschnitt 34 führt zu einer Entkoppler/Kraftbegrenzer-Baugruppe 36, die im einzelnen später anhand der Fig. 6, 7 und 8 beschrieben wird. Von dort führt ein zweiter Zugseilabschnitt 38 zu einem Fahrzeugteil, das bei einem Fahrzeugaufprall eine Relativverschiebung gegenüber dem Fahrzeugaufbau erfährt, insbesondere der Motor- und Getriebeblock.

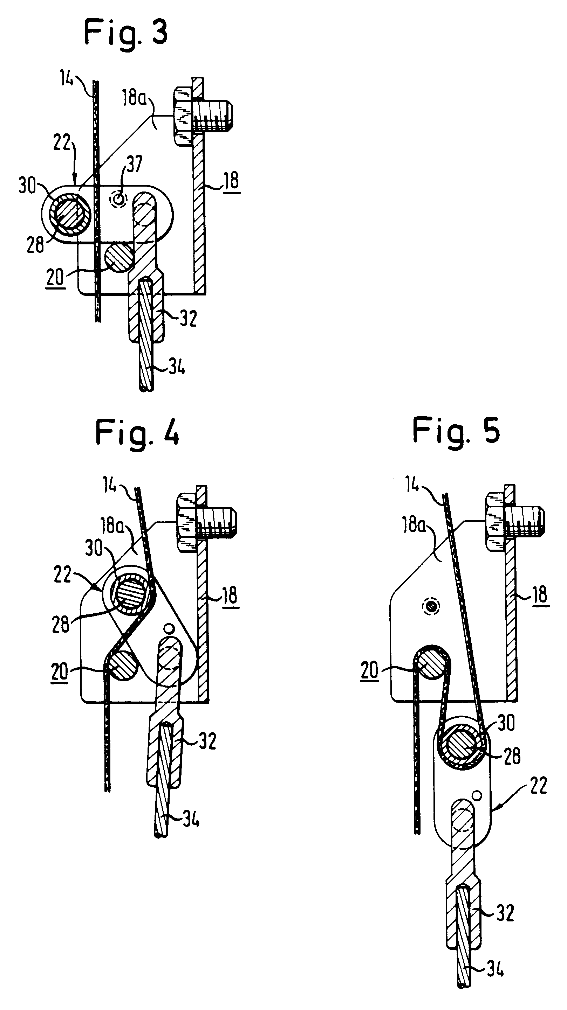

Bei Aktivierung des Gurtstraffers wird über den Zugseilabschnitt 34 und den Zuganker 32 auf die Schwinge 22 Zug ausgeübt, wodurch zunächst die Scherstifte 37, 39 abgeschert werden. Die sich auf dem Stützteil 20 abstützende Schwinge 22 wird nun zunächst verschwenkt, wobei die Rolle 30 in Richtung des Umlenkbeschlages 12 verlagert wird, bis sie mit dem Gurtbandabschnitt 14 in Berührung kommt. Bei weiterer Verschwenkung der Schwinge 22 gleitet diese über die Oberfläche des Stützteils 20, wobei durch die Rolle 30 das Gurtband zunächst gegen die Oberfläche des Stützteils 20 geführt und dann allmählich um dieses umgelenkt wird. Zugleich gleitet nun die Schwinge 22 über die Oberfläche des Stützteils 20, wie in Fig. 4 gezeigt, wobei die dem Zuganker 32 benachbarten Enden der Schenkel 24, 26 gegen die Bodenwand des Beschlagteils 18 stoßen und durch diese geführt werden. Die Schwinge 22 wird nun zwischen dem Stützteil 20 und dem Boden des Beschlagteils 18 durchgezogen, wobei sich eine Schlaufe in dem Gurtbandabschnitt 14 bildet. Dieser Zustand ist in Fig. 5 dargestellt. Die Gurtbandschlaufe wird durch weitere Abwärtsbewegung der Schwinge 22 mit dem Zuganker 34 vergrößert, bis der über das Zugseil 34 ausgeübte Zug beendet ist.

Noch bevor eine Aktivierung des Gurtstraffers erfolgt, ist der Gurtaufroller 10 durch seinen fahrzeug- und gurtbandsensitiven Blockiermechanismus gesperrt. Folglich wird bei der Bildung der Gurtbandschlaufe der von dem Umlenkbeschlag 12 zum Fahrzeuginsassen führende Gurtbandabschnitt verkürzt.

Die in den Fig. 6, 7 und 8 gezeigte Entkopplungs/Kraftbegrenzer-Baugruppe 36 wird nun näher beschrieben.

Diese Baugruppe 36 besteht aus einem Führungsrohr 50, das an seinem unteren Ende einen Flansch 50a zur Abstützung am Fahrzeugaufbau aufweist, einem in dem Führungsrohr 50 teleskopartig verschiebbar aufgenommenen Wandlerrohr 52 und zwei Kopplungselementen 54, 56, von denen das erste, gurtstrafferseitige Kopplungselement 56 mit dem Zugseilabschnitt 34 und das antriebsseitige Kopplungselement 54 mit dem Zugseilabschnitt 38 verbunden ist. In das mit dem Flansch 50a versehene Ende des Führungsrohres 50 ist eine Buchse 50b eingesetzt, die als Anschlag für die Bewegung des Wandlerrohres 52 im Inneren des Führungsrohres 50 dient. Das Kopplungselement 56 bildet einen am Ende des Zugseilabschnitts 34 aufgepreßten Kolben, der abweichend von der Darstellung in der Zeichnung auch einteilig ausgebildet sein kann. Das Kupplungselement 54 ist am Boden des Wandlerrohres 52 befestigt und weist eine kegelförmige Rampenfläche 54a zur Abstützung von Sperrkugeln 58 auf. Die Sperrkugeln 58 ragen durch fensterartige Öffnungen 52a in der Wandung des Wandlerrohres 52 hindurch und gelangen in Berührung mit der Innenseite des Führungsrohres 50. Durch einen Ring 60 aus gummielastischem Material werden die Sperrkugeln 58 in Eingriff mit der Innenseite des Führungsrohres 50 vorbelastet. Die Steigung der Rampenfläche 54a ist so gewählt, daß eine ungehinderte Bewegung des Wandlerrohres 52 in Richtung zu der als Anschlag dienenden Buchse 50b erfolgen kann; in der entgegengesetzten Richtung werden jedoch die Sperrkugeln 58 wirksam, indem sie durch die Rampenflächen 54a gegen die Wandung des Führungsrohres 50 gedrückt werden, diese unter hoher Last verformen und so das Wandlerrohr 52 am Führungsrohr 50 blockieren. Dieser Zustand ist in Fig. 7 gezeigt.

Das Wandlerrohr 52 besitzt einen ersten Abschnitt 52b, dessen Außendurchmesser an den Innendurchmesser des Führungsrohres 50 angepaßt ist, und einen zweiten Abschnitt 52c verminderten Durchmessers, der mit der Innenseite des Führungsrohres 50 einen Ringspalt bildet. Zwischen den beiden Abschnitten 52b, 52c ist auf der Innenseite des Wandlerrohres 52 eine Stufe gebildet. Das Kopplungsteil 56 befindet sich bei den in den Figuren 6 und 7 gezeigten Stellungen zwischen dieser Schulter und dem Kopplungselement 54. Das Kopplungselement 54 ist mit einem angeformten, allgemein topfförmigen Fortsatz versehen, der durch eine Schürze 54d gebildet ist. Der Außenrand dieser Schürze 54d dient dem Kopplungselement 56 als Anschlag zur Festlegung seiner in Fig. 6 gezeigten Ruhestellung. Der auf dem Zugseilabschnitt 34 aufgepreßte Teil des Kopplungselements 56 ragt in diesem Zustand in den Innenraum der Schürze 54d hinein. An seiner von dem Kopplungselement 54 abgewandten Seite ist das Kopplungselement 56 mit zwei einander diametral gegenüberliegenden Ausnehmungen versehen, in denen jeweils eine Walze 62 bzw. 64 aufgenommen ist. Der Außenumfang der Walzen 62, 64 ragt über den Innendurchmesser des Abschnitts 52c des Wandlerrohrs 52 hinaus.

Wenn ausgehend von dem in Fig. 6 gezeigten Ruhezustand ein Zug in Richtung des Pfeiles F1 auf den Zugseilabschnitt 38 ausgeübt wird, bewegt sich das Wandlerrohr 52 im Führungsrohr 50 in Richtung zur der als Anschlag wirkenden Buchse 50b. Bei dieser Bewegung trifft die Stufe zwischen den Abschnitten 52b, 52c des Wandlerrohrs 52 auf die Walzen 62, 64, so daß über diese Walzen das Kupplungselement 56 mitgenommen wird. Über den Zugseilabschnitt 34 wird dann der in den Figuren 1 und 2 gezeigte Gurtstraffer aktiviert. Bei einem stärkeren Fahrzeugaufprall wird das Wandlerrohr 52 verlagert, bis es an der Buchse 50b anstößt. Bei einem besonders schweren Fahrzeugaufprall kann der Zugseilabschnitt 38 von dem Kopplungselement 54 abreißen. Das Wandlerrohr 52 wird in jedem Fall durch die Sperrkugeln 58 in seiner verlagerten Stellung relativ zum Führungsrohr 50 arretiert. Nach erfolgter Gurtstraffung tritt der in Fig. 7 gezeigte Zustand ein. In diesem Zustand tritt infolge der Vorverlagerung des Fahrzeuginsassen eine Zugkraft im Zugseilabschnitt 34 in Richtung des Pfeiles F2 auf. Unter der Wirkung dieser Zugkraft F2 werden zunächst die Sperrkugeln 58 in Eingriff mit der Wandung des Führungsrohres 50 gedrückt. Wenn die Kraft F2 einen bestimmten Schwellwert erreicht, ab dem eine Kraftbegrenzung erwünscht ist, überwinden die Walzen 62, 64 die Stufe zwischen den Abschnitten 52b, 52c des Wandlerrohres 52 und dringen in die Wandung des Abschnittes 52c ein. Das Material des Abschnitts 52c wird nun plastisch verformt, wobei die erwünschte Energiewandlung eintritt. Das einen Kolben bildende Kopplungselement 56 wird nun im Inneren des Wandlerrohres 52 in Richtung des Pfeiles F2 verlagert, wie in Fig. 8 dargestellt ist. Das freie Ende des Wandlerrohres 52 ist durch einen radial einwärtsgerichteten Bund verschlossen, der einen Anschlag für das Kopplungselement 56 bildet.

Wie aus der Zeichnung ersichtlich ist, besitzt der Abschnitt 52c des Wandlerrohres 52 einen progressiv in Richtung zum freien Ende hin zunehmenden Wandungsquerschnitt, um ein entsprechendes Ansteigen des Kraftbegrenzungsniveaus zu erreichen.

Bei dem in Fig. 6 gezeigten Ruhezustand kann das Wandlerrohr 52 durch ein abscherbares Element 70 an dem Führungsrohr 50 festgelegt sein.

Die beschriebene Entkopplungs/Kraftbegrenzer-Baugruppe 36 bewirkt somit eine zuverlässige Entkopplung des Gurtstraffers von dem Zugseilabschnitt 38 bzw. dem damit verbundenen Fahrzeugteil, so daß zu hohe Kräfte sicher vom Gurtbandsystem ferngehalten werden.

## Patentansprüche

1. Sicherheitsgurt-Rückhaltesystem für Fahrzeuge, mit einem Gurtstraffer (16), der mittels eines Angriffsteils (30) am Gurtband (14) zur Verkürzung von dessen wirksamer Länge angreift und dessen Antrieb von der aufprallbedingten Verlagerung eines Fahrzeugteils relativ zum Fahrzeugaufbau abgeleitet ist, dadurch gekennzeichnet, daß in den Kraftfluß zwischen dem Fahrzeugteil und dem Angriffsteil (30) eine Entkopplungseinrichtung eingefügt ist, die aus zwei kraftschlüssig gekoppelten, unter Last relativ zueinander im Sinne einer Entfernung voneinander verschiebbaren Kopplungselementen (54, 56) besteht, von denen das erste (56), gurtbandseitige über einen ersten Zugmittelabschnitt (34) an das Angriffsteil (30) und das zweite, antriebsseitige über einen zweiten Zugmittelabschnitt (38) an das Fahrzeugteil angeschlossen ist, daß dem zweiten Kopplungselement (54) eine Führungseinrichtung (50) zugeordnet ist, die am Fahrzeugaufbau abgestützt und mit einem Anschlag (50b) zur Begrenzung der Verlagerung des zweiten Kopplungselements (54) bei einer Gurtstraffung versehen ist, und daß zwischen der Führungseinrichtung (50) und dem zweiten Kopplungselement (54) eine Rücklaufsperre (58) angeordnet ist, die einer Rückbewegung des zweiten Kopplungselements (54) von dem Anschlag (50b) fort entgegenwirkt.

2. Rückhaltesystem nach Anspruch 1, dadurch gekennzeichnet, daß die Führungseinrichtung ein Führungsrohr (50) aufweist, in dem das zweite Kopplungselement (52) verschiebbar aufgenommen ist.

3. Rückhaltesystem nach Anspruch 2, dadurch gekennzeichnet, daß die Rücklaufsperre (58) durch ein Wälzkörper-Gesperre gebildet ist.

4. Rückhaltesystem nach Anspruch 3, dadurch gekennzeichnet, daß das zweite Kopplungselement (54) in ein teleskopartig in dem Führungsrohr (50) verschiebbares Rohr (52) eingesetzt ist, und das Wälzkörper-Gesperre wenigstens einen Wälzkörper (58) aufweist, der radial innen an einer Kegelfläche (54a) des zweiten Kopplungselements (54) abgestützt ist und durch eine Öffnung (52a) in der Wandung des Rohres (52) mit der Innenseite des Führungsrohres (50) in Eingriff tritt.

5. Rückhaltesystem nach Anspruch 4, dadurch gekennzeichnet, daß das erste Kopplungselement (56) als im Inneren des Rohres (52) verschiebbar aufgenommener Kolben ausgebildet ist und daß der Kraftschluß zwischen dem ersten (56) und dem zweiten (54) Kopplungselement durch Wälzkörper (62, 64) hergestellt ist, die radial innen an dem Kolben abgestützt sind und an der Innenseite der Wandung des Rohres (52) angreifen sowie unter Last in diese bei plastischer Materialverformung eindringen.

6. Rückhaltesystem nach Anspruch 4 oder 5, dadurch gekennzeichnet, daß der zweite, antriebsseitige Zugmittelabschnitt (38) an einem am Boden des Rohres (52) angeordneten Anschlußelement befestigt ist, an dem die Kegelfläche (54a) gebildet ist.

7. Rückhaltesystem nach den Ansprüchen 4 und 5, dadurch gekennzeichnet, daß das Anschlußelement auf seiner dem Kolben zugewandten Seite mit einer Schürze (54d) versehen ist, an deren Außenrand der Kolben (56) zur Festlegung seiner Ruhestellung aufsitzt und in deren Innenraum der Kolben teilweise hineinragt.

8. Rückhaltesystem nach einem der vorstehenden Ansprüche, dadurch gekennzeichnet, daß der Gurtstraffer (16) mittels des Angriffsteils (30) unter Bildung einer Schlaufe am Gurtband angreift.

9. Rückhaltesystem nach einem der vorstehenden Ansprüche, dadurch gekennzeichnet, daß der Gurtstraffer (16) ein auf einer Seite des frei verlaufenden Gurtbandes (14) in geringem Abstand von diesem angeordnetes Stützteil (20) aufweist und auf der anderen Seite des Gurtbandes in geringem Abstand von diesem das Angriffsteil (30) angeordnet ist, daß bei Aktivierung des Gurtstraffers das Angriffsteil (30) gegen das Gurtband (14), dieses gegen das Stützteil (20) und schließlich das Angriffsteil (30) unter Bildung einer zum Gurtbandverlauf parallelen Gurtbandschlaufe an dem Stützteil (20) vorbei bewegt wird, daß das Angriffsteil (30) zwischen den ersten Enden zweier paralleler Schenkel (24, 26) einer Schwinge (22) gehalten ist, die im Ruhezustand des Gurtstraffers (16) mit quer zum Gurtband (14) gehaltenen Schenkeln (24, 26) an deren Kanten auf dem Stützteil (20) abgestützt ist, und daß der erste Zugmittelabschnitt (32) an den zweiten Enden der Schenkel (24, 26) der Schwinge (22) angeschlossen ist.

## Claims

1. A vehicle safety belt restraining system with a belt tensioner (16) which by means of an engaging member (30) engages the belt (14) to shorten its effective length and the drive of which is derived from the shift of a vehicle member relative to the vehicle body under impact conditions characterized by including in the flow of the force between the vehicle member and the engaging member (30) decoupling means comprising two coupling members (54, 56) coupled together in force transmitting manner and permitting displacement relative to each other under load in the sense of movement away from each other, of which the first (56), located on the side of the belt, is connected via a first tensioning means section (34) to the engaging member (30) and the second, located on the side of the drive, is connected to the vehicle member through a second tensioning means section (38), by the second coupling member (54) being assigned a guiding means (50) which is supported on the vehicle body and is provided with a stop (50b) to limit the displacement of the second coupling member (54) during belt tensioning and by a reverse stroke inhibiting means (58) being provided between the guide means (50) and the second coupling member (54) to counteract any return movement of the second coupling member (54) away from the stop (50b).

2. A restraining system according to claim 1, wherein said guide means feature a guide tube (50) in which the second coupling member (52) is slidably accommodated.

3. A restraining system according to claim 2, wherein said reverse stroke inhibiting means (58) is formed by a roller lock.

4. A restraining system according to claim 3, wherein said second coupling member (54) is incorporated in a tube (52) telescopically shiftable in said guide tube (54) and said roller lock has at least one roller (58) supported radially inwards at a bevel surface (54a) of said second coupling member (54) and engaging the inside of said guide tube (50) through an opening (52a) in the wall of the tube (52).

5. A restraining system according to claim 4, wherein said first coupling member (56) has the form of a piston slidably accommodated within said tube (52) and the force transmitting connection between the first (56) and second (54) coupling members is produced by rollers (62, 64) supported radially inward by the piston and engaging the inside of the wall of said tube (52) and, under load, penetrating therein with plastic material deformation.

6. A restraining system according to claim 4 or 5, wherein the second section (38) of the tension means at the drive end is secured to a connecting member arranged at the base of said tube (52), said bevel surface (54a) being formed at said connecting member.

7. A restraining system according to claim 4 or 5, wherein at its end facing the piston said connecting member is provided with a sleeve portion (54d) at the outer edge of which the piston (56) abuts to establish its rest condition and into the interior of which the piston partly extends.

8. A restraining system according to any of the above claims, wherein said belt tensioner (16) engages the belt by means of the engaging member (30) to form a loop.

9. A restraining system according to any of the above claims, wherein said belt tensioner (16) features a supporting member (20) arranged on one side of the freely running belt (14) slightly spaced away therefrom and said engaging member (30) on the other side of the belt slightly spaced away therefrom, wherein when the belt tensioner is activated said engaging member (30) is moved against said belt (14), the latter against the supporting member (20) and finally said engaging member (30) past said supporting member (20) in forming a loop in the belt parallel to the run of the belt, whereby said engaging member (30) is held between the first ends of two parallel arms (24, 26) of a pivotal bracket (22) which is supported in the rest condition of said belt tensioner (16) at the supporting member (20) at the edges of the said arms (24, 26) held transversely to said belt (14) and wherein the first tensioning means section (32) is connected to the second ends of said arms (24, 26) of said pivotal bracket (22).

## Revendications

1. Système de retenue de ceinture de sécurité pour véhicules automobiles, comportant un tendeur de ceinture (16) qui agit, au moyen d'un élément d'attaque (30), sur la sangle de ceinture (14) pour raccourcir sa longueur utile et dont l'entraînement est dérivé du déplacement, occasionné par un rebondissement, d'un élément du véhicule par rapport à sa carrosserie, caractérisé en ce que dans le flux des forces entre l'élément du véhicule et l'élément d'attaque (30) est inséré un dispositif de désaccouplement, qui est constitué de deux éléments d'accouplement (54, 56) accouplés par force, déplaçables sous charge l'un par rapport à l'autre, dans le sens de leur éloignement, dont le premier (56) est raccordé à l'élément d'attaque (30), côté sangle de ceinture par une première portion de moyen de traction (34), et le second est raccordé à l'élément de véhicule, côté entraînement par une seconde portion de moyen de traction (38), en ce qu'au second élément d'accouplement (54) est associé un dispositif de guidage (50) qui prend appui contre la carrosserie du véhicule et qui est pourvu d'une butée (50b) destinée à limiter le déplacement du second élément d'accouplement (54) dans le cas d'une tension de la ceinture, et en ce qu'entre le dispositif de guidage (50) et le second élément d'accouplement (54) il est prévu un dispositif de blocage de retour (58) qui s'oppose à un mouvement en retour du second élément d'accouplement (54) à partir de la butée (50b).

2. Système de retenue selon la revendication 1, caractérisé en ce que le dispositif de guidage comporte un tube de guidage (50) dans lequel le second élément d'accouplement (52) est logé coulissant.

3. Système de retenue selon la revendication 2, caractérisé en ce que le dispositif de blocage de retour (58) est formé par un encliquetage à corps de roulement.

4. Système de retenue selon la revendication 3, caractérisé en ce que le second élément d'accouplement (54) est placé dans un tube (52) coulissant télescopiquement dans le tube de guidage (50), et l'encliquetage à corps de roulement comporte au moins un corps de roulement (58) qui est soutenu à l'intérieur radialement contre une surface conique (50a) du second élément d'accouplement (54) et qui vient en prise, à travers une ouverture (52a) pratiquée dans la paroi du tube (52), avec le côté intérieur du tube de guidage (50).

5. Système de retenue selon la revendication 4, caractérisé en ce que le premier élément d'accouplement (56) est un piston logé coulissant à l'intérieur du tube (52) et en ce que le flux des forces entre le premier élément d'accouplement (56) et le second (54) est réalisé par des corps de roulement (62, 64) qui sont soutenus à l'intérieur radialement contre le piston et agissent sur le côté intérieur de la paroi du tube (52) et pénètrent sous charge dans celui-ci sous déformation plastique de la matière.

6. Système de retenue selon la revendication 4 ou 5, caractérisé en ce que la deuxième portion de moyen de traction (38) côté entraînement est fixée sur un élément de raccordement, placé sur le fond du tube (52) et sur lequel est formée la surface conique (54a).

7. Système de retenue selon les revendications 4 et 5, caractérisé en ce que l'élément de raccordement est pourvu, sur son côté tourné vers le piston, d'un tablier (54d) sur le bord extérieur duquel repose le piston (56), pour fixer sa position de repos et à l'intérieur duquel le piston s'engage partiellement.

8. Système de retenue selon l'une des revendications précédentes, caractérisé en ce que le tendeur de ceinture (16) agit sur la sangle de ceinture au moyen de l'élément d'attaque (30), en formant une boucle.

9. Système de retenue selon l'une des revendications précédentes, caractérisé en ce que le tendeur de ceinture (16) comporte un élément d'appui (20) placé sur un côté de la sangle (14) s'étendant librement, à une faible distance de celle-ci, et en ce que sur l'autre côté de la sangle, à une faible distance de celle-ci, se situe l'élément d'attaque (30), en ce que lors de l'activation du tendeur de ceinture, l'élément d'attaque (30) est déplacé contre la sangle (14), cette dernière est déplacée contre l'élément d'appui (20) et enfin l'élément d'attaque (30) passe devant l'élément d'appui (20), en formant une boucle de sangle parallèle au parcours de la sangle, en ce que l'élément d'attaque (30) est maintenu entre les premières extrémités de deux branches (24, 26) parallèles d'une bielle oscillante (22) qui, à l'état de repos du tendeur (16), prend appui, avec les branches (24, 26) maintenues transversalement à la sangle (14), sur leurs bords, sur l'élément d'appui (20), et en ce que la première portion de moyen de traction (32) se rattache aux secondes extrémités des branches (24, 26) de la bielle oscillante (22).
